# EUROPEAN PATENT APPLICATION

(11) **EP 4 668 351 A1**
(43) Date of publication of application: **24.12.2025**
(21) Application number: 23932766.1
(22) Date of filing: 06.11.2023
(51) Int. Cl.: H01M 4/13, H01M 10/058, H01M 10/04

(54) **CARBON FIBER POLE PIECE, LITHIUM METAL BATTERY, BATTERY MODULE, BATTERY PACK AND, ELECTRIC APPARATUS**

(30) Priority: 13.04.2023 CN 202310395104
(71) Applicant: Contemporary Amperex Technology Co., Limited, Ningde, Fujian 352100 (CN)
(72) Inventor: ZHENG, Yilin, Ningde, Fujian 352100 (CN); WANG, Yiheng, Ningde, Fujian 352100 (CN); GE, Xiaoming, Ningde, Fujian 352100 (CN); XIONG, Xueqing, Ningde, Fujian 352100 (CN)
(74) Representative: Ran, Handong
(86) International application number: PCT/CN2023/129940
(87) International publication number: WO 2024/212495

(57) **Abstract**

Provided are a carbon fiber electrode sheet, a lithium metal battery, a battery module, a battery pack, and an electric apparatus. The carbon fiber electrode sheet includes double layers of carbon fibers and a tab, and a lower part of the tab is disposed between the double layers of carbon fibers to form a tab extraction structure enveloped by the double layers of carbon fibers. By forming the tab extraction structure enveloped by the double layers of carbon fibers, the risk of the tab detachment due to unidirectional force application is reduced, and an electrolyte can contact the tab extraction structure only by passing through the double layers of carbon fibers, thereby reducing the risk that the electrolyte washes and erodes the tab extraction structure, and further enhancing the stability of connection between the tab and the carbon fibers.

## Description

The present application claims priority to Chinese Patent Application No. 202310395104.6, filed with the China National Intellectual Property Administration on April 13, 2023 and entitled "Carbon Fiber Electrode Sheet, Lithium Metal Battery, Battery Module, Battery Pack, and Electric Device", which is incorporated herein by reference in its entirety.

### TECHNICAL FIELD

The present application belongs to the technical field of lithium metal batteries, and in particular, to a carbon fiber electrode sheet, a lithium metal battery, a battery module, a battery pack, and an electric apparatus.

### BACKGROUND

With the development of society, we have an increasing requirement for a battery life of an electronic apparatus, and traditional lithium-ion batteries cannot meet the needs of battery development. Compared with the existing graphite negative electrode and even the silicon-oxygen or silicon-carbon material negative electrode with a higher capacity, metal lithium has a low electrochemical potential (-3.045 v) and a high theoretical capacity (3860 mA · h · g-1), and a low density (0.534g · cm-3), so that the lithium metal battery has a relatively high energy density and is the most promising lithium secondary battery material.

In a lithium metal battery with carbon fiber as a negative collector, extraction through the tab is a process difficulty. At present, two methods, i.e., mechanical connection and conductive adhesive connection, are mainly used. Both connection methods have problems such as easy detachment of a tab.

### SUMMARY

The embodiment of the present application aims to provide a carbon fiber electrode sheet with stable tab connection, a lithium metal battery, a battery module, a battery pack, and an electrical apparatus.

### TECHNICAL SOLUTION

An embodiment of the present application employs technical solutions below.

Provided in a first aspect is a carbon fiber electrode sheet including double layers of carbon fibers and a tab, a lower part of the tab being disposed between the double layers of carbon fibers to form a tab extraction structure enveloped by the double layers of carbon fibers.

In the present application, by forming the tab extraction structure enveloped by the double layers of carbon fibers, on the one hand, the tab is fixed between the carbon fibers, reducing the risk of tab detachment due to unidirectional force application and enhancing the stability of connection between the tab and the carbon fibers, and on the other hand, an electrolyte can contact the tab extraction structure only by passing through the double layers of carbon fibers, thereby reducing the risk that the electrolyte washes and erodes the tab extraction structure and further enhancing the stability of connection between the tab and the carbon fibers.

In some embodiments, the tab extraction structure includes a conductive adhesive, by which a lower part of the tab is bonded between the double layers of carbon fibers. The risk that the electrolyte washes and erodes the conductive adhesive can be reduced, enhancing the stability of the connection between the tab and the carbon fibers.

In some embodiments, the bonding is two-sided bonding. A bonding strength can be increased, further enhancing the stability of the connection between the tab and the carbon fibers.

In some embodiments, upper end surfaces of the double layers of carbon fibers are provided with a protruding structure in which the tab extraction structure is disposed. By arranging the tab extraction structure in the protruding structure, the risk that the electrolyte washes and erodes the tab extraction structure can be further reduced, enhancing the stability of the connection between the tab and the carbon fiber.

In some embodiments, a width of the protruding structure is greater than that of the tab. By setting the width of the protruding structure to be greater than that of the tab, the risk that the electrolyte erodes the tab extraction structure is further reduced, enhancing the stability of the connection between the tab and the carbon fiber.

In some embodiments, a lowest position of the tab extraction structure is higher than the upper end surfaces of the double layers of carbon fibers. By the lowest position of the tab extraction structure higher than the upper end surfaces of the double layers of carbon fibers, the risk that the electrolyte erodes the tab extraction structure is further reduced, enhancing the stability of the connection between the tab and the carbon fiber.

Provided in a second aspect of the present application is a lithium metal battery, including the carbon fiber electrode sheet according to the first aspect of the present application.

Provided in a third aspect of the present application is a battery module, comprising the lithium metal battery according to the second aspect of the present application.

Provided in a fourth aspect of the present application is a battery pack, including the battery module according to the third aspect of the present application.

Provided in a fifth aspect of the present application is an electric apparatus, comprising at least one of the lithium metal battery according to the second aspect of the present application, the battery module according to the third aspect of the present application, and the battery pack according to the fourth aspect of the present application.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

To describe technical solutions in embodiments of the present application more clearly, the following briefly describes the accompanying drawings for describing the embodiments or the exemplary technology. It is clear that the accompanying drawings described in the following are merely some embodiments of the present application. Those of ordinary skill in the art can still derive other accompanying drawings from these accompanying drawings without creative efforts.
FIG. 1 is a schematic diagram of a structure of an electrode sheet according to an embodiment of the present application;
FIG. 2 is a schematic diagram, from another angle, of a structure of an electrode sheet according to an embodiment of the present application;
FIG. 3 is a schematic diagram of a structure of an electrode sheet according to another embodiment of the present application;
FIG. 4 is a schematic view, from another angle, of a structure of an electrode sheet according to another embodiment of the present application;
FIG. 5 is a schematic diagram of a lithium metal battery according to an implementation of the present application;
FIG. 6 is an exploded view of a lithium metal battery according to an implementation of the present application shown in FIG. 5;
FIG. 7 is a schematic diagram of a battery module according to an implementation of the present application;
FIG. 8 is a schematic diagram of a battery pack according to an implementation of the present application;
FIG. 9 is an exploded view of the battery pack according to an implementation of the present application shown in FIG. 8; and
FIG. 10 is a schematic diagram of an electric apparatus using the lithium metal battery, as a power supply, according to an implementation of the present application.

### Description of reference signs:

11. Double layers of carbon fibers; 111. Upper end surfaces; 112. Protruding structure; 12. Tab; 13. Conductive adhesive; 1. Battery pack; 2. Upper case; 3. Lower case; 4. Battery module; 5. Lithium metal battery; 51. Housing; 52. Electrode assembly; 53. Cover plate.

### DESCRIPTION OF EMBODIMENTS

In order to make the objects, technical solutions and advantages of the present application clearer, the present application will be further described in detail below with reference to the drawings and embodiments. It should be understood that the specific embodiments described herein are only used to explain the present application and are not used to limit the present invention.

As noted, when a component is referred to as being "fixed on" or "disposed on" another component, it may be directly or indirectly on another component. When a component is referred to as being "connected to" another component, it can be directly or indirectly connected to another component. The orientation or positional relationship indicated by the terms such as "upper", "lower", "left", and "right" is based on the orientation or positional relationship shown in the drawings, only to facilitate the description, rather than to indicate or imply that the referred device or element must have a specific orientation, be constructed and operated in a specific orientation, and therefore cannot be understood as a limitation to the present application. And those skilled in the art can understand the meanings of the terms above according to specific conditions. The terms "first" and "second" are only used for facilitating descriptive purposes, and should not be construed as indicating or implying relative importance or implicitly indicating the number of technical features. The meaning of "a plurality of" is two or more, unless otherwise specifically defined.

To illustrate the technical solution provided by the present application, detailed description is made below in combination with specific drawings and embodiments.

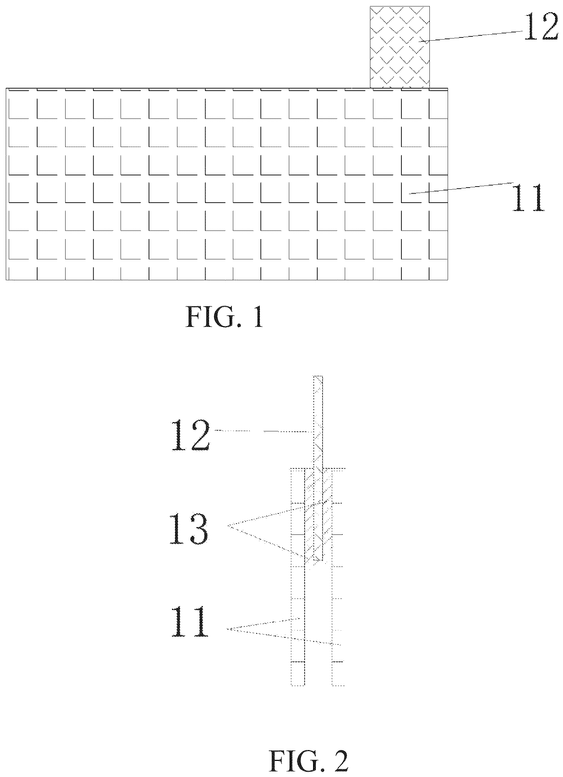

Referring to FIGS. 1 to 4, the present application provides a carbon fiber electrode sheet, including double layers of carbon fibers 11, and a tab 12, and a lower part of the tab 12 is disposed between the double layers of carbon fibers 11 to form a tab extraction structure enveloped by the double layers of carbon fibers 11.

The lower part of the tab of the present application is disposed between the double layers of carbon fibers to form the tab extraction structure enveloped by the double layers of carbon fibers 11. On one hand, the lower part of the tab 12 is fixed between the carbon fibers, and compared with single-sided fixing, the double layers of carbon fibers 11 form a sandwich structure, so that the tab 12 is not easy to be detached when it is subjected to an external force in any direction, thereby enhancing the stability of the connection between the tab 12 and the carbon fibers. On the other hand, the tab extraction structure enveloped by the double layers of carbon fibers 11 is equivalent to a layer of "a barrier" added for the tab 12, and an electrolyte can contact the tab extraction structure only by passing through the carbon fibers, thereby reducing the risk that the electrolyte washes and erodes the tab extraction structure, and further enhancing the stability of the connection between the tab 12 and the carbon fibers.

The carbon fiber electrode sheet above may include two or more layers of carbon fibers. The lower part of the tab is disposed between any two layers of carbon fibers.

The connection manner of the tab and the carbon fiber is not limited, including mechanical connection, conductive adhesive connection, and the like. The mechanical connection includes metal plating on carbon fibers or a fixed metal mesh.

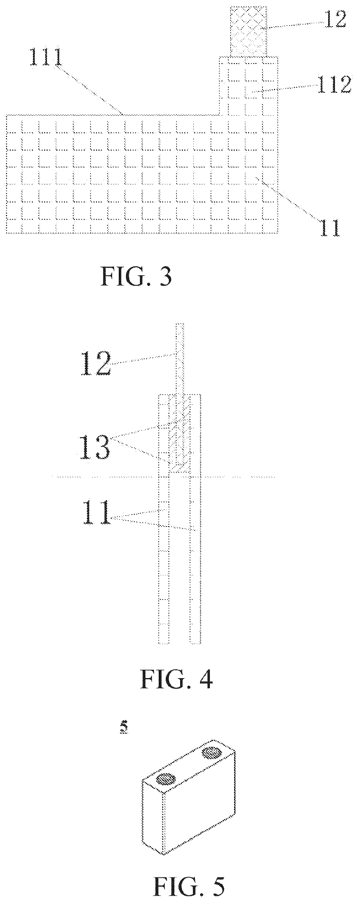

In some implementations, as shown in FIG. 2 and FIG. 4, the tab extraction structure includes a conductive adhesive 13 by which a lower part of the tab 12 is bonded between the double layers of carbon fibers 11.

Compared with other connection methods, the conductive adhesive connection has characteristics of a simple structure, convenient connection, etc., and can greatly simplify a process for connecting the tab and the carbon fibers. In addition, the problem that the conductive adhesive connection is more easily corroded by an electrolyte due to its low connection strength can also be overcome by the technical solution provided by the present application.

In some implementations, as shown in FIGS. 2 and 4, the bonding is double-sided bonding.

In the present application, the lower part of the tab is bonded, at its both sides, to carbon fibers, not only increasing a bonding strength, but also ensuring that the tab is not detached immediately when a bonding structure at one side fails, to further enhance the stability of the connection between the tab and the carbon fibers.

In some implementations, as shown in FIG. 3 and FIG. 4, the upper end surfaces 111 of the double layers of carbon fibers 11 are provided with a protruding structure 112 in which the tab extraction structure is disposed.

The upper end surfaces of the double layers of carbon fibers 11 in the present application are provided with the protruding structure 112 in which the tab extraction structure is disposed. The design, compared with a conventional design of leading out a tab at a middle part of an electrode plate, can further reduce the risk that the electrolyte washes and erodes the tab extraction structure while ensuring that the tab is not easily detached by a force, enhancing the stability of the connection between the tab 12 and the carbon fibers.

In some embodiments, as shown in FIG. 3, a width of the protruding structure 112 is greater than that of the tab 12.

The width of the protruding structure 112 in the present application is greater than the width of the tab 12, and that can increase the ability of enveloping the tab 12, further reducing the risk that the electrolyte washes and erodes the tab extraction structure, and enhancing the stability of the connection between the tab 12 and the carbon fibers. If the width of the protruding structure 112 is less than or equal to that of the tab 12, the electrolyte is likely to invade the tab extraction structure through the side of the protruding structure 112 to directly contact the tab extraction structure, causing washing and erosion. The protruding structure 112 does not need to have a too wide width, and if it is too wide, waste of carbon fibers is caused since this structure is provided for leading out the tab 12.

In some implementation, as shown in FIG. 4, the lowest position of the tab extraction structure is higher than the upper end surfaces 111 of the double layers of carbon fibers 11.

The lowest position of the tab extraction structure is the lowest position of the conductive adhesive 13. The upper end surfaces of the double layers of carbon fibers 11 are the position indicated by the dashed line. When the lowest position of the conductive adhesive 13 is higher than the upper end surfaces, the risk that the electrolyte washes and erodes the tab extraction structure can be further reduced, enhancing the stability of the connection between the tab 12 and the carbon fiber.

In addition, with appropriate reference to the drawings, the following describes a lithium metal battery, a battery module, a battery pack, and an electric apparatus in the present application.

In an implementation of the present application, a lithium metal battery is provided.

Generally, the lithium metal battery includes a positive electrode sheet, a negative electrode sheet, an electrolyte, and a separator. During charge and discharge of the battery, active ions are intercalated and deintercalated back and forth between the positive pole piece and the negative pole piece. The electrolyte functions to conduct ions between the positive pole piece and the negative pole piece. The separator is disposed between the positive pole piece and the negative pole piece, to mainly prevent positive and negative poles from being short-circuited and allow ions to pass through.

In some embodiments, the positive pole piece, the negative pole piece, and the separator may be manufactured into the pole assembly through a winding process or a lamination process.

In some implementations, the lithium metal battery may include an outer package. The outer package may be used to package the pole assembly and the electrolyte.

In some implementations, the outer package of the lithium metal battery may be a hard casing, for example, a hard plastic casing, an aluminum casing, or a steel casing. The outer package of the lithium metal battery may also be a pouch, such as a bag-type pouch. The material of the pouch may be plastic, and examples of the plastic include polypropylene, polybutylene terephthalate, and polybutylene succinate.

The shape of the lithium metal battery is not particularly limited in the present application, and may be a cylindrical shape, a square shape, or any other shape. For example, FIG. 5 shows a lithium metal battery 5 having a square structure as an example.

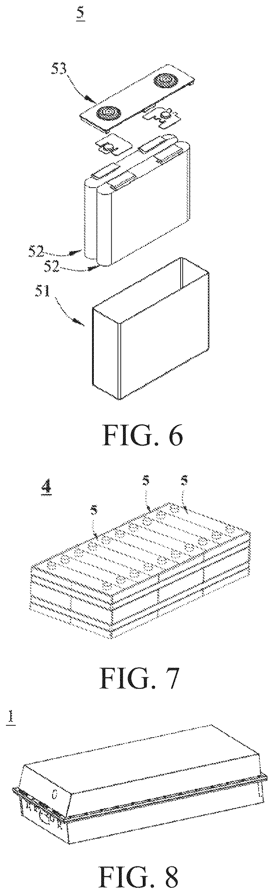

In some implementations, referring to FIG. 6, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the lithium metal battery 5, and the number may be selected by those skilled in the art according to specific practical requirements.

In some implementations, the lithium metal batteries may be assembled into a battery module, and there may be one or a plurality of lithium metal batteries included in the battery module, and the specific number may be selected by those skilled in the art according to the application and capacity of the battery module.

FIG. 7 shows a battery module 4 as an example. Referring to FIG. 5, in the battery module 4, a plurality of lithium metal batteries 5 may be arranged in series in the longitudinal direction of the battery module 4. Certainly, the lithium metal batteries may alternatively be arranged in any other manner. Further, the plurality of lithium metal batteries 5 may be fixed by a fastener.

Optionally, the battery module 4 may further include a housing having an accommodation space in which the plurality of lithium metal batteries 5 are accommodated.

In some embodiments, the battery modules may be further assembled into a battery pack, and there may be one or a plurality of battery modules included in the battery pack, and the specific number may be selected by those skilled in the art according to the application and capacity of the battery pack.

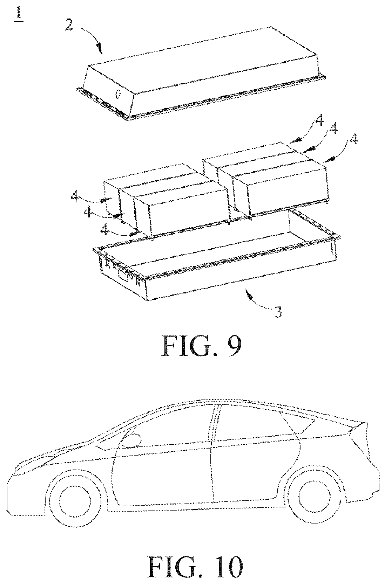

FIG. 8 and FIG. 9 show a battery pack 1 as an example. Referring to FIG. 8 and FIG. 9, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, the present application further provides an electric apparatus. The electric apparatus includes at least one of the lithium metal battery, the battery module, or the battery pack provided in the present application. The lithium metal battery, the battery module or the battery pack may be used as a power source or an energy storage unit of the electrical apparatus. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

The lithium metal battery, the battery module, or the battery pack may be selected according to use requirements of the electric apparatus.

FIG. 10 shows an electric apparatus as an example. The electric apparatus is a pure electric vehicle, a hybrid electric vehicle, a plug-in hybrid electric vehicle, or the like. In order to meet the demand for high power and high energy density of a lithium metal battery by the electric apparatus, a battery pack or a battery module may be used.

In another example, the apparatus may be a cell phone, a tablet computer, a notebook computer, or the like. This electric apparatus is generally required to be thin and lightweight, and may use the lithium metal battery as a power supply.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A carbon fiber electrode sheet, comprising double layers of carbon fibers and a tab, a lower part of the tab being disposed between the double layers of carbon fibers to form a tab extraction structure enveloped by the double layers of carbon fibers.

2. The carbon fiber electrode sheet according to claim 1, wherein the tab extraction structure comprises a conductive adhesive, by which a lower part of the tab is bonded between the double layers of carbon fibers.

3. The carbon fiber electrode sheet according to claim 2, wherein the bonding is two-sided bonding.

4. The carbon fiber electrode sheet according to claim 1, wherein upper end surfaces of the double layers of carbon fibers are provided with a protruding structure in which the tab extraction structure is disposed.

5. The carbon fiber electrode sheet according to claim 4, wherein a width of the protruding structure is greater than that of the tab.

6. The carbon fiber electrode sheet according to any one of claims 1-5, wherein a lowest position of the tab extraction structure is higher than the upper end surfaces of the double layers of carbon fibers.

7. A lithium metal battery, comprising the carbon fiber electrode sheet according to any one of claims 1-6.

8. A battery module, comprising the lithium metal battery according to claim 7.

9. A battery pack, comprising the battery module according to claim 8.

10. An electric apparatus, comprising at least one of the lithium metal battery according to claim 7, the battery module according to claim 8, and the battery pack according to claim 9.
